# EUROPÄISCHE PATENTANMELDUNG

(11) **EP 3 486 970 A1**
(43) Veröffentlichungstag der Anmeldung: **22.05.2019**
(21) Anmeldenummer: 18000899.7
(22) Anmeldetag: 15.11.2018
(51) Int. Cl.: H01M 2/20

(54) **VORRICHTUNG ZUM SPEICHERN UND/ODER BEREITSTELLEN VON ELEKTRISCHER ENERGIE, VERBINDUNGSMITTEL ZUR VERWENDUNG IN EINER VORRICHTUNG ZUM SPEICHERN UND/ODER BEREITSTELLEN VON ELEKTRISCHER ENERGIE UND VERFAHREN ZUR HERSTELLUNG**

(30) Priorität: 15.11.2017 DE 102017010551
(71) Anmelder: BMZ GmbH, 63791 Kahl am Main (DE)
(72) Erfinder: BAUER, Sven, 63781 Karlstein am Main (DE)
(74) Vertreter: Nitz, Astrid

(57) **Zusammenfassung**

Vorrichtung zum Speichern und/oder Bereitstellen elektrischer Energie umfassend elektrisch leitend verbundene Akkumulatorzellen, insbesondere Lithium-Ionen-Akkumulatoren, insbesondere für Elektrofahrräder und/oder Power-Tools und/oder Gartengeräte, umfassend zumindest ein elektrisch leitendes Verbindungsmittel zur leitenden Verbindung zwischen elektrischen Kontaktflächen, insbesondere einer Akkumulatorzelle und einem Batteriemanagementsystems und/ oder einer Verbindung von einem ersten Akkumulatorzellpol zu einem zweiten Akkumulatorzellpol, wobei das Verbindungsmittel einen flächigen Körper mit zumindest einer Längsachse aufweist, an zumindest einem Körperende des Verbindungsmittels jeweils zumindest ein Kontaktbereich vorgesehen ist, wobei der Kontaktbereich des Verbindungsmittels zumindest einen positiv vorspringenden Bereich zur Kontaktierung der elektrischen Kontaktfläche aufweist, wobei der positiv vorspringende Bereich zumindest eine Längsöffnung aufweist, so dass durch die zumindest eine Längsöffnung Schweißstellen, insbesondere Laserschweißstellen, des Verbindungsmittels mit der elektrischen Kontaktfläche voneinander räumlich zu trennen sind.

## Beschreibung

Die Erfindung betrifft eine Vorrichtung zum Speichern und/oder Bereitstellen elektrischer Energie nach dem Oberbegriff von Anspruch 1, ein Verbindungsmittel zur Verwendung in einer Vorrichtung zum Speichern und/oder Bereitstellen elektrischer Energie nach dem Oberbegriff von Anspruch 9, Verwendung einer Vorrichtung zum Speichern und/oder Bereitstellen elektrischer Energie nach dem Oberbegriff von Anspruch 10 und ein Verfahren zur Herstellung einer Vorrichtung zum Speichern und/oder Bereitstellen elektrischer Energie nach dem Oberbegriff von Anspruch 11

Bekannt sind Vorrichtungen zum Speichern und/oder Bereitstellen elektrischer Energie, wobei flächenförmige Verbindungsmittel zur elektrischen Leitung angebracht werden, die beispielsweise standardisiert mit einfach großflächig gestalteten Zungen hergestellt werden.

Nachteilig ist es, dass der Schweißprozess im Stand der Technik somit zur wechslend starken, aufschmelzenden lokalen Erhitzung des Verbinders führt, was zur Qualitätsminderung führt und in unterschiedlichen Umgebungen eines Schweißverfahrens, insbesondere Laserschweißverfahrens, ein schnelle Energieweiterleitung, insbesondere Hitzeableitung, in der Kürze des Schweißprozesses nicht erreicht wird und die elektrische Verbindung nicht immer gleich zuverlässig schnell und prozessstabil erreicht werden kann.

Aufgabe der vorliegenden Erfindung ist es daher, eine Vorrichtung zum Speichern und/oder Bereitstellen elektrischer Energie mit elektrisch leitend verbundenen Akkuelementen bereitzustellen, die einfach und sicher zu handhaben ist und zugleich eine leichte individuelle Anpassung an die Erfordernisse und Gewährleistung einer hohen Schweißqualität ermöglicht.

Die Aufgabe wird gelöst durch eine Vorrichtung zum Speichern und/oder Bereitstellen elektrischer Energie umfassend elektrisch leitend verbundene Akkumulatorzellen, insbesondere Lithium-Ionen-Akkumulatoren, insbesondere für Elektrofahrräder und/oder Power-Tools und/oder Gartengeräte und/oder Gabelstapler, umfassend zumindest ein elektrisch leitendes Verbindungsmittel zur leitenden Verbindung zwischen elektrischen Kontaktflächen, insbesondere einer Akkumulatorzelle und einem Batteriemanagementsystems und/ oder einer Verbindung von einem ersten Akkumulatorzellpol zu einem zweiten Akkumulatorzellpol, wobei das Verbindungsmittel einen flächigen Körper mit zumindest einer Längsachse aufweist, an zumindest einem Körperende des Verbindungsmittels jeweils zumindest ein Kontaktbereich vorgesehen ist, wobei der Kontaktbereich des Verbindungsmittels zumindest einen positiv vorspringenden Bereich zur Kontaktierung der elektrischen Kontaktfläche aufweist, wobei der positiv vorspringende Bereich zumindest eine Längsöffnung aufweist, so dass durch die zumindest eine Längsöffnung Schweißstellen, insbesondere Laserschweißstellen, des Verbindungsmittels mit der elektrischen Kontaktfläche voneinander räumlich zu trennen sind.

Durch die vorliegende Erfindung wird eine sehr zuverlässige und leitfähige Verbindung von elektrischen Kontaktflächen in einer Vorrichtung zum Speichern und/oder Bereitstellen elektrischer Energie bereitgestellt. Die Erfindung erhöht wesentlich die Qualität der Schweißstelle, insbesondere Tiefe und Übergangswiderstand der Schweißstelle, die stark von der Temperatur des Verbinderelements an der Schweißstelle am Anfang des Schweißprozesses abhängt, so dass im Stand der Technik im Fall mehrerer Schweißungen in räumlicher Nähe auf einen Zellpol hintereinander sich die Schweißqualität verschlechtert, weil sich der Verbinder erhitzt, so dass im Stand der Technik deswegen Pausezeiten zwischen den Schweißvorgängen eingehalten werden müssen, damit sich der Verbinder ausreichend abkühlen kann. Die vorliegende Erfindung dagegen reduziert die Erwärmung der nächsten Schweißstelle durch das Schweißen der vorherigen Stelle indem die Wärmeleitung durch die Erfindung mit den eingebrachten, speziell geformten Elemente, insbesondere Schlitzen, unterbrochen wird. Somit können Schweißungen schneller hintereinander durchgeführt werden, was zu einem höheren Durchsatz / kürzeren Taktzeiten führt, ohne dass die Schweißqualität verringert wird.

Durch geeignete positiv vorspringende Bereiche, insbesondere mit einer breiteren Auflagefläche, wird bei der vorliegenden Erfindung ein guter Kontakt gewährleistet, wobei durch die Trennung durch die Längsöffnungen nach der Befestigung durch Schweißen, insbesondere durch Laserschweißen, das eine sensible Strahlführung und schnelle Abkühlung erfordert, eine schnelle Wärmeleitung und Abkühlung sichergestellt wird. Der Leitwert für die Leitung des Stromes wird nicht beeinträchtigt. Die Verbindungsmittel können einfach an unterschiedliche Längen und Geometrien angepasst werden und stellen durch die geeignete Materialwahl insbesondere mit Kupfer und/oder umfassend Zinn und/oder Zink und/oder Kupfer als Legierung, insbesondere aus Zinn und/oder Zink und/oder Kupfer, eine sehr gute gleichbleibende elektrische Leitung und zugleich durch das Laserschweißen eine sichere Anbringung an den Kontaktstellen sicher, wobei eine Beschichtung beispielsweise bereits einfach ab Werk oder auch individuell anschließend auf den Kupferkern aufbringbar ist. Hierdurch lassen sich sicher und zuverlässig verschiedene Arten von Akkumulatorenpaks zusammenstellen, die eine gleichbleibend gute elektrische Leitung aufweisen.

Zum Laserschweißen ist die Längsöffnung vorteilhaft verwendbar, die auch hinsichtlich eventuell auftretender Temperaturabtransporte mit weiteren Öffnungen auszustatten ist. Zudem können halbrunde Längsöffnungsformen verwendet werden, wodurch beispielsweise Torsionskräfte über den speziellen Aufbau der Öffnung abgefangen werden können, so dass geringere Spannungen auf die Schweißstelle wirken. Die Längsöffnungen können individuell angepasst aufgebaut sein, insbesondere an beiden Endbereichen eines Verbindungsmittels geschlossen oder auch an einem Endbereich offen, es können im Wesentlichen einfache Längsöffnungen sein.

Vorteilhaft ist es, wenn die Längsöffnung innerhalb oder über den Kontaktbereich des Verbindungsmittels verlaufend vorgesehen ist.

Vorteilhaft ist es, wenn zwei oder mehrere Längsöffnungen vorgesehen sind.

Vorteilhaft ist es, wenn eine oder mehrere Längsöffnungen parallel oder senkrecht verlaufend zu der Längsachse, insbesondere überkreuzend angeordnet.

Vorteilhaft ist es, wenn mehrere Längsöffnungen sternförmig angeordnet sind, insbesondere drei Längsöffnungen mittig aufeinandertreffend in jeweils einem Winkel von etwa 120° zueinander, insbesondere mit mittiger Öffnung.

Vorteilhaft ist es, wenn vier Längsöffnungen mittig aufeinandertreffend in jeweils einem Winkel von etwa 90° zueinander, insbesondere mit mittiger Öffnung vorgesehen sind.

Vorteilhaft ist es, wenn eine oder mehrere Längsöffnungen gestanzt sind.

Vorteilhaft ist es, wenn das Verbindungsmittel durch Schweißen, insbesondere Laserschweißen und/oder Widerstandsschweißen und/oder Diffusionsschweißen, an die elektrisch leitende Kontaktfläche anbringbar ist, wobei insbesondere beidseitig einer Längsöffnung ein Schweißkontakt im Kontaktbereich vorgesehen ist.

Die Aufgabe wird ebenfalls gelöst durch ein elektrisch leitendes Verbindungsmittel für eine Vorrichtung zum Speichern und/oder Bereitstellen elektrischer Energie nach einem der Ansprüche 1 bis 8, zur leitenden Verbindung zwischen elektrischen Kontaktflächen, insbesondere einer Akkumulatorzelle und einem Batteriemanagementsystems und/ oder einer Verbindung von einem ersten Akkumulatorzellpol zu einem zweiten Akkumulatorzellpol, wobei das Verbindungsmittel einen flächigen Körper mit zumindest einer Längsachse aufweist, an zumindest einem Körperende des Verbindungsmittels zumindest ein Kontaktbereich vorgesehen ist, der zumindest eine Längsöffnung aufweist und eine Anformung mit einem positiv vorspringenden Bereich aufweist, die zur Verbindung auf die elektrische Kontaktfläche mit dem positiv vorspringenden Bereich aufzulegen ist, wobei das Verbindungsmittel ein Kernmaterial umfassend Kupfer und/oder eine Kupferlegierung aufweist und eine Oberflächenbeschichtung umfassend Zinn und/oder Zink und/oder Kupfer und/oder Kombinationen umfassend Zinn und/oder Zink und/oder Kupfer als Legierung, insbesondere aus Zinn und/oder Zink und/oder Kupfer.

Die Aufgabe wird ebenfalls gelöst durch eine Verwendung einer Vorrichtung zum Speichern und/oder Bereitstellen elektrischer Energie nach einem der Ansprüche 1 bis 8, für Akkumulatorenzellen, insbesondere angeordnet in Paks, für Elektrofahrräder und/oder Powertoolgeräte und/oder Gartengeräte und/oder Gabelstapler.

Die Aufgabe wird ebenfalls gelöst durch ein Verfahren zur Herstellung einer Vorrichtung zum Speichern und/oder Bereitstellen elektrischer Energie, die mehrfach aufladbar ist, umfassend Akkumulatorzellen, insbesondere Lithium-Ionen-Akkumulatoren, insbesondere für Elektrofahrräder und/oder Power-Tools und/oder Gartengeräte und/oder Gabelstapler, die insbesondere mit einem Batteriemanagementsystem ausgestattet sind, nach Anspruch 1 bis 8, wobei durch zumindest ein elektrisch leitendes Verbindungsmittel, insbesondere nach Anspruch 9, eine leitende Verbindung zwischen elektrischen Kontaktflächen hergestellt wird, insbesondere mittels Laserschweißen, insbesondere zwischen einer Akkumulatorzelle und einem Batteriemanagementsystems und/oder einer Verbindung von einem ersten Akkumulatorzellpol zu einem zweiten Akkumulatorzellpol, wobei das Verbindungsmittel einen flächigen Körper mit zumindest einer Längsachse aufweist, an zumindest einem Körperende des Verbindungsmittels jeweils zumindest ein Kontaktbereich vorgesehen ist, der jeweils zumindest eine Längsöffnung aufweist und eine im Wesentlichen senkrecht zu der Längsachse ausgebildete Anformung mit einem positiv vorspringenden Bereich aufweist, die zur Verbindung auf die elektrische Kontaktfläche mit dem positiv vorspringenden Bereich aufzulegen ist, wobei der Kontaktbereich des Verbindungsmittels zumindest einen positiv vorspringenden Bereich zur Kontaktierung der elektrischen Kontaktfläche aufweist, wobei der positiv vorspringende Bereich zumindest eine Längsöffnung aufweist, wobei an jeweils einer Längsöffnung zumindest jeweils eine Laserschweißstelle jeweils an einer gegenüberliegenden Seite einer Längsöffnung gesetzt werden.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1a: einen Ausschnitt einer Vorrichtung zum Speichern und/oder Bereitstellen elektrischer Energie,
- Fig. 2a: einen Ausschnitt einer Vorrichtung zum Speichern und/oder Bereitstellen elektrischer Energie,
- Fig. 2b: einen Ausschnitt einer Vorrichtung zum Speichern und/oder Bereitstellen elektrischer Energie und
- Fig. 3: einen Ausschnitt einer Vorrichtung zum Speichern und/oder Bereitstellen elektrischer Energie.

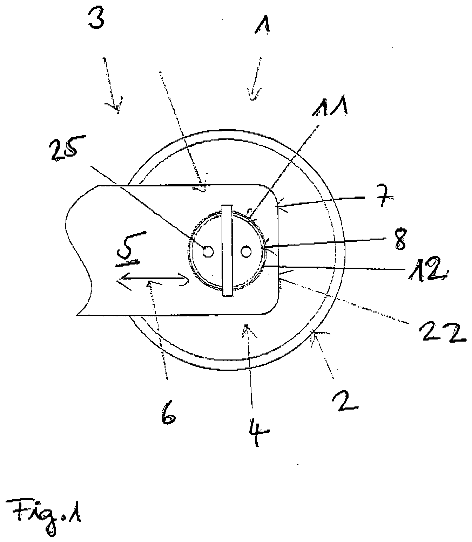

Fig. 1 zeigt einen Ausschnitt einer erfindungsgemäßen Vorrichtung 1 zum Speichern und/oder Bereitstellen elektrischer Energie mit elektrisch leitend verbundenen Akkumulatorzellen, insbesondere Lithium-Ionen-Akkumulatoren, insbesondere für Elektrofahrräder und/oder Power-Tools und/oder Gartengeräte, umfassend zumindest ein elektrisch leitendes Verbindungsmittel 3 zur leitenden Verbindung zwischen elektrischen Kontaktflächen 4, insbesondere einer Akkumulatorzelle 2 und einem Batteriemanagementsystems und/ oder einer Verbindung von einem ersten Akkumulatorzellpol 22 zu einem zweiten Akkumulatorzellpol 22, wobei das Verbindungsmittel 3 einen flächigen Körper 5 mit zumindest einer Längsachse 6 aufweist, an zumindest einem Körperende 7 des Verbindungsmittels 3 jeweils zumindest ein Kontaktbereich 8 vorgesehen ist, wobei der Kontaktbereich 8 des Verbindungsmittels 3 zumindest einen positiv vorspringenden Bereich 11 zur Kontaktierung der elektrischen Kontaktfläche 4 aufweist, wobei der positiv vorspringende Bereich 11 zumindest eine Längsöffnung 9 aufweist, so dass durch die zumindest eine Längsöffnung 9 Schweißstellen 25, insbesondere Laserschweißstellen, des Verbindungsmittels 3 mit der elektrischen Kontaktfläche 4 voneinander räumlich zu trennen sind, wobei die Längsöffnung 9 innerhalb oder über den Kontaktbereich 8 des Verbindungsmittels 3 verlaufend vorgesehen ist.

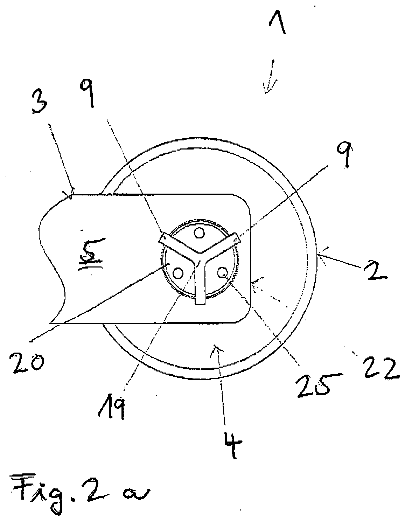

Fig. 2a zeigt einen Ausschnitt einer Vorrichtung zum Speichern und/oder Bereitstellen elektrischer Energie, wobei mehrere Längsöffnungen 9 sternförmig angeordnet sind, insbesondere drei Längsöffnungen 9 mittig aufeinandertreffend in jeweils einem Winkel 20 von etwa 120° zueinander, insbesondere mit mittiger Öffnung 19.

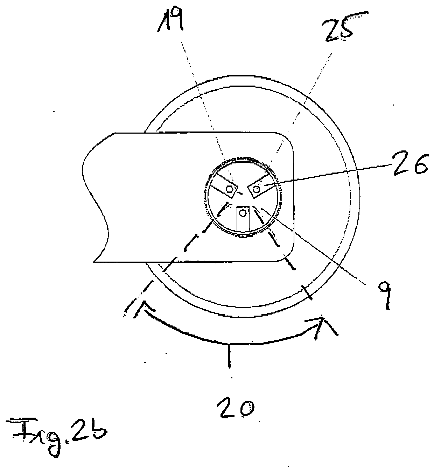

Fig. 2b zeigt einen Ausschnitt einer Vorrichtung zum Speichern und/oder Bereitstellen elektrischer Energie, drei winklig geformte, im Wesentlichen Längsöffnungen 9 mittig aufeinandertreffend in jeweils einem Winkel 20 von etwa 120° zueinander, insbesondere mit mittiger Öffnung 19, wobei Schweißstellen 25 auf Stegen 26 angebracht sind.

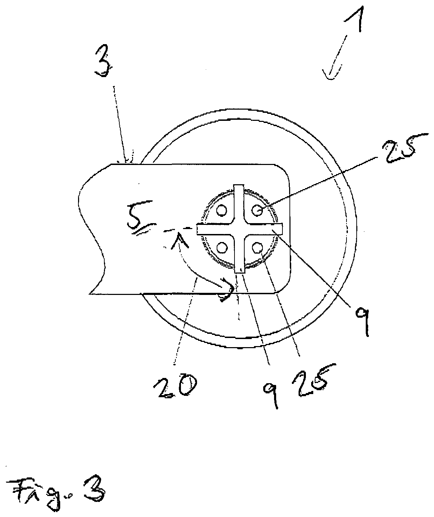

Fig. 3 zeigt einen Ausschnitt einer Vorrichtung zum Speichern und/oder Bereitstellen elektrischer Energie, wobei vier Längsöffnungen (9) mittig aufeinandertreffend in jeweils einem Winkel 20 von etwa 90° zueinander, insbesondere mit mittiger Öffnung 19 vorgesehen sind.

### BEZUGSZEICHENLISTE

- 1: Vorrichtung zum Speichern und/oder Bereitstellen
- 2: Akkumulatorzelle
- 3: Verbindungsmittel
- 4: Kontaktfläche
- 5: Körper
- 6: Längsachse
- 7: Körperende
- 8: Kontaktbereich
- 9: Längsöffnung
- 11: vorspringender Bereich
- 12: Seite
- 19: mittige Öffnung
- 20: Winkel
- 22: Akkumulatorzellpol
- 25: Schweißstelle
- 26: Steg

## Patentansprüche

1. Vorrichtung (1) zum Speichern und/oder Bereitstellen elektrischer Energie umfassend elektrisch leitend verbundene Akkumulatorzellen (2), insbesondere Lithium-Ionen-Akkumulatoren, insbesondere für Elektrofahrräder und/oder Power-Tools und/oder Gartengeräte und/oder Gabelstapler,
umfassend zumindest ein elektrisch leitendes Verbindungsmittel (3) zur leitenden Verbindung zwischen elektrischen Kontaktflächen (4), insbesondere einer Akkumulatorzelle (2) und einem Batteriemanagementsystems und/ oder einer Verbindung von einem ersten Akkumulatorzellpol (22) zu einem zweiten Akkumulatorzellpol (22), wobei das Verbindungsmittel (3) einen flächigen Körper (5) mit zumindest einer Längsachse (6) aufweist,
an zumindest einem Körperende (7) des Verbindungsmittels (3) jeweils zumindest ein Kontaktbereich (8) vorgesehen ist,
wobei der Kontaktbereich (8) des Verbindungsmittels (3) zumindest einen positiv vorspringenden Bereich (11) zur Kontaktierung der elektrischen Kontaktfläche (4) aufweist, wobei der positiv vorspringende Bereich (11) zumindest eine Längsöffnung (9) aufweist, so dass durch die zumindest eine Längsöffnung (9) Schweißstellen (25), insbesondere Laserschweißstellen, des Verbindungsmittels (3) mit der elektrischen Kontaktfläche (4) voneinander räumlich zu trennen sind.

2. Vorrichtung nach Anspruch 1, **dadurch gekennzeichnet, dass** die Längsöffnung (9) innerhalb oder über den Kontaktbereich (8) des Verbindungsmittels (3) verlaufend vorgesehen ist,

3. Vorrichtung nach einem der Ansprüche 1 bis 2, **dadurch gekennzeichnet, dass** zwei oder mehrere Längsöffnungen (9) vorgesehen sind.

4. Vorrichtung nach einem der Ansprüche 1 bis 3, **dadurch gekennzeichnet, dass** eine oder mehrere Längsöffnungen (9) parallel oder senkrecht verlaufend zu der Längsachse (6), insbesondere überkreuzend angeordnet sind.

5. Vorrichtung nach einem der Ansprüche 1 bis 4, **dadurch gekennzeichnet, dass** mehrere Längsöffnungen (9) sternförmig angeordnet sind, insbesondere drei Längsöffnungen (9) mittig aufeinandertreffend in jeweils einem Winkel (20) von etwa 120° zueinander, insbesondere mit mittiger Öffnung (19).

6. Vorrichtung nach einem der Ansprüche 1 bis 5, **dadurch gekennzeichnet, dass** vier Längsöffnungen (9) mittig aufeinandertreffend in jeweils einem Winkel (20) von etwa 90° zueinander, insbesondere mit mittiger Öffnung (19) vorgesehen sind.

7. Vorrichtung nach einem der Ansprüche 1 bis 6, **dadurch gekennzeichnet, dass** eine oder mehrere Längsöffnungen (9) gestanzt sind.

8. Vorrichtung nach einem der Ansprüche 1 bis 7, **dadurch gekennzeichnet, dass** das Verbindungsmittel (3) durch Schweißen, insbesondere Laserschweißen und/oder Widerstandsschweißen und/oder Diffusionsschweißen, an die elektrisch leitende Kontaktfläche (4) anbringbar ist, wobei insbesondere beidseitig einer Längsöffnung (9) ein Schweißstelle (25) im Kontaktbereich (8) vorgesehen ist.

9. Elektrisch leitendes Verbindungsmittel (3) für eine Vorrichtung (1) zum Speichern und/oder Bereitstellen elektrischer Energie nach einem der Ansprüche 1 bis 8, zur leitenden Verbindung zwischen elektrischen Kontaktflächen (4), insbesondere einer Akkumulatorzelle (2) und einem Batteriemanagementsystems und/ oder einer Verbindung von einem ersten Akkumulatorzellpol (22) zu einem zweiten Akkumulatorzellpol (22), wobei das Verbindungsmittel (3) einen flächigen Körper (5) mit zumindest einer Längsachse (6) aufweist, an zumindest einem Körperende (7) des Verbindungsmittels (3) zumindest ein Kontaktbereich (8) vorgesehen ist, der zumindest eine Längsöffnung (9) aufweist und eine Anformung (10) mit einem positiv vorspringenden Bereich (11) aufweist, die zur Verbindung auf die elektrische Kontaktfläche (4) mit dem positiv vorspringenden Bereich (11) aufzulegen ist,
wobei das Verbindungsmittel (3) ein Kernmaterial umfassend Kupfer und/oder eine Kupferlegierung aufweist und eine Oberflächenbeschichtung umfassend Zinn und/oder Zink und/oder Kupfer und/oder Kombinationen umfassend Zinn und/oder Zink und/oder Kupfer als Legierung, insbesondere aus Zinn und/oder Zink und/oder Kupfer.

10. Verwendung einer Vorrichtung (1) zum Speichern und/oder Bereitstellen elektrischer Energie nach einem der Ansprüche 1 bis 8, für Akkumulatorenzellen (9), insbesondere angeordnet in Paks, für Elektrofahrräder und/oder Powertoolgeräte und/oder Gartengeräte und/oder Gabelstapler.

11. Verfahren zur Herstellung einer Vorrichtung (1) zum Speichern und/oder Bereitstellen elektrischer Energie, die mehrfach aufladbar ist, umfassend Akkumulatorzellen, insbesondere Lithium-Ionen-Akkumulatoren, insbesondere für Elektrofahrräder und/oder Power-Tools und/oder Gartengeräte und/oder Gabelstapler, die insbesondere mit einem Batteriemanagementsystem ausgestattet sind, nach Anspruch 1 bis 8, wobei durch zumindest ein elektrisch leitendes Verbindungsmittel, insbesondere nach Anspruch 9, eine leitende Verbindung zwischen elektrischen Kontaktflächen (4) hergestellt wird, insbesondere mittels Laserschweißen, insbesondere zwischen einer Akkumulatorzelle (2) und einem Batteriemanagementsystems und/oder einer Verbindung von einem ersten Akkumulatorzellpol (22) zu einem zweiten Akkumulatorzellpol (22), wobei das Verbindungsmittel (3) einen flächigen Körper (5) mit zumindest einer Längsachse (6) aufweist, an zumindest einem Körperende (7) des Verbindungsmittels (3) jeweils zumindest ein Kontaktbereich (8) vorgesehen ist, der jeweils zumindest eine Längsöffnung (9) aufweist und eine im Wesentlichen senkrecht zu der Längsachse (6) ausgebildete Anformung (10) mit einem positiv vorspringenden Bereich (11) aufweist, die zur Verbindung auf die elektrische Kontaktfläche (4) mit dem positiv vorspringenden Bereich (11) aufzulegen ist,
wobei der Kontaktbereich (8) des Verbindungsmittels (3) zumindest einen positiv vorspringenden Bereich (11) zur Kontaktierung der elektrischen Kontaktfläche (4) aufweist, wobei der positiv vorspringende Bereich (11) zumindest eine Längsöffnung (9) aufweist, wobei an jeweils einer Längsöffnung (9) zumindest jeweils eine Laserschweißstelle jeweils an einer gegenüberliegenden Seite (12) einer Längsöffnung (9) gesetzt werden.
